(19) **Europäisches Patentamt / European Patent Office / Office européen des brevets**

(11) **EP 2 633 531 B1**

(12) # EUROPÄISCHE PATENTSCHRIFT

(45) Veröffentlichungstag und Bekanntmachung des Hinweises auf die Patenterteilung:
**03.05.2017 Patentblatt 2017/18**

(21) Anmeldenummer: **11749176.1**

(22) Anmeldetag: **29.08.2011**

(51) Int Cl.:
*H01F 7/16* $^{(2006.01)}$

(86) Internationale Anmeldenummer:
**PCT/EP2011/064805**

(87) Internationale Veröffentlichungsnummer:
**WO 2012/055609 (03.05.2012 Gazette 2012/18)**

(54) **ELEKTROMAGNETEINRICHTUNG SOWIE FAHRERASSISTENZEINRICHTUNG**

SOLENOID DEVICE AND DRIVER ASSISTANCE DEVICE

DISPOSITIF ÉLECTROMAGNÉTIQUE ET DISPOSITIF D'AIDE À LA CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2010 DE 102010042845**

(43) Veröffentlichungstag der Anmeldung:
**04.09.2013 Patentblatt 2013/36**

(60) Teilanmeldung:
**17157110.2**

(73) Patentinhaber: **Robert Bosch GmbH**
**70442 Stuttgart (DE)**

(72) Erfinder: **STAHR, Wolf**
**74232 Abstatt (DE)**

(56) Entgegenhaltungen:
**WO-A1-01/36243     GB-A- 2 258 702**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung betrifft eine Elektromagneteinrichtung mit einem Magnetanker und einem stirnseitig des Magnetankers angeordneten Ankergegenstück, wobei Magnetanker und Ankergegenstück relativ zueinander verlagerbar sind und zwischen einer Magnetankerstirnseite und einer Ankergegenstückstirnseite ein Luftspalt vorgesehen ist, über welchen ein magnetischer Hauptschluss der Elektromagneteinrichtung vorliegt, wobei in dem Luftspalt eine mit der Magnetankerstirnseite und der Ankergegenstückstirnseite zumindest bereichsweise in Berührkontakt bringbare, aus einem magnetisierbaren Material bestehende Scheibe angeordnet ist, und wobei in zumindest einer Stellung von Magnetanker und Ankergegenstück zueinander ein wenigstens bereichsweise über die Scheibe verlaufender magnetischer Nebenschluss vorliegt.

Elektromagneteinrichtungen der eingangs genannten Art sind aus dem Stand der Technik bekannt. Sie können beispielsweise Bestandteil von Magnetventilen oder jeweils als Magnetventil ausgebildet sein, wobei die Magnetventile wiederum für Fahrerassistenzeinrichtungen, insbesondere ABS-, TCS- oder ESP-Einrichtungen, zum Einsatz kommen können. Die Elektromagneteinrichtung weist den Magnetanker auf, welcher relativ zu dem Ankergegenstück verlagerbar ist. Häufig ist dabei lediglich der Magnetanker verlagerbar, während das Ankergegenstück ortsfest angeordnet ist. Das Ankergegenstück kann beispielsweise als Polkern ausgebildet sein. Um die relative Verlagerung von Magnetanker und Ankergegenstück zu bewirken, wirken die beiden Elemente zusammen. Dazu weist beispielsweise das Ankergegenstück eine oder mehrere Spulen auf, während der Magnetanker aus einem magnetisierbaren oder magnetischen Material besteht.

Das Ankergegenstück ist stirnseitig des Magnetankers vorgesehen. Üblicherweise sind der Magnetanker und das Ankergegenstück derart zueinander angeordnet, dass sie, unabhängig von der Verlagerung von Magnetanker und Ankergegenstück relativ zueinander, nicht miteinander in Verbindung treten können. Zwischen dem Magnetanker und dem Ankergegenstück beziehungsweise der dem Ankergegenstück zugewandten Stirnseite des Magnetankers und der dem Magnetanker zugewandten Stirnseite des Ankergegenstücks, also der Magnetankerstirnseite und der Ankergegenstückstirnseite, liegt demnach ein Spalt, der so genannte Luftspalt beziehungsweise Arbeitsluftspalt, vor. Die Größe des Luftspalts ist abhängig von der Position des Magnetankers in Bezug zu dem Ankergegenstück. Die Größe des Luftspalts ändert sich demnach bei der Verlagerung von Magnetanker und Ankergegenstück relativ zueinander. Der Begriff Luftspalt bedeutet nicht, dass der zwischen der Magnetankerstirnseite und der Ankergegenstückstirnseite vorliegende Spalt tatsächlich mit Luft gefüllt ist.

Vielmehr kann er mit beliebigen Medien gefüllt sein und dient lediglich der Beabstandung von Magnetanker und Ankergegenstück.

Der Magnetanker und das Ankergegenstück bilden zusammen eine Stelleinrichtung aus. Die von dieser Stelleinrichtung erzeugbare Magnetkraft, welche die Verlagerung von Magnetanker und Ankergegenstück relativ zueinander realisiert, ist durch die Größe des Luftspalts charakterisiert. Das bedeutet, dass die Magnetkraft von der Größe des Luftspalts abhängig ist, wobei die Magnetkraft bei kleiner werdendem Luftspalt sehr stark - üblicherweise exponentiell - zunimmt. Diese starke Zunahme bei kleiner werdendem Luftspalt erschwert die stetige Stellbarkeit beziehungsweise die Proportionalisierung der Elektromagneteinrichtung.

Es ist bekannt, dass diesem starken Anstieg der Magnetkraft mit einer Vergrößerung des Luftspalts zumindest teilweise abgeholfen werden kann. Dies liegt darin begründet, dass die mit der Elektromagneteinrichtung realisierbare Stellkraft beziehungsweise Magnetkraft, welche für die relative Verlagerung von Magnetanker und Ankergegenstück sorgt, mitmachen/mit wachsendem Luftspalt exponentiell abnimmt. Der Verlauf der Magnetkraft über die Größe des Luftspalts wird also mit größer werdendem Luftspalt flacher, liegt jedoch gleichzeitig auf einem niedrigeren Niveau. Dieses niedrige Niveau der Magnetkraft, ohne die Möglichkeit, relevante Bauteile der Elektromagneteinrichtung, insbesondere die mindestens eine Spule, geometrisch zu vergrößern, ist jedoch problematisch. Dies gilt insbesondere bei der Verwendung der Elektromagneteinrichtung für ein stromlos geschlossenes Magnetventil. Hier muss die verfügbare Magnetkraft ausreichend groß sein, um das Magnetventil gegen eine schließend wirkende Druckfeder zu öffnen. Die Druckfeder ist üblicherweise so stark ausgelegt, dass sie bereits in einem gering vorgespannten Zustand die von dem Betriebsmedium des Magnetventils beziehungsweise von der Druckdifferenz über das Magnetventil bewirkte öffnende Kraft überwinden kann. Auch wird durch die Vergrößerung des Luftspalts eine sehr steife Druckfeder notwendig, weil die Gradienten von Federkraft und Magnetkraft über die Entfernung von Magnetanker und Ankergegenstück aufeinander abgestimmt sein sollten. Dabei wird häufig der Gradient der Federkraft größer gewählt als der Gradient der Magnetkraft.

Eine weitere Möglichkeit, den Anstieg der Magnetkraft zumindest teilweise zu beseitigen, ist die Realisierung einer so genannten Tauchstufe. Dabei greift ein Bereich des Ankergegenstücks zumindest bereichsweise in eine Ausnehmung des Magnetankers ein, sobald der Magnetanker eine bestimmte Entfernung von dem Ankergegenstück unterschreitet. Die Realisierung einer solchen Tauchstufe bei einer Elektromagneteinrichtung ist jedoch aufwändig, weil eine sehr genaue Führung des Magnetankers zu dem Ankergegenstück notwendig ist, um ein Aufeinandertreffen beziehungsweise einen Berührkontakt zwischen Magnetanker und Ankergegenstück - auch im Bereich der Tauchstufe und insbesondere in radialer Richtung - zu vermeiden. Ein solcher Berührkontakt würde zu einer deutlichen Verringerung des Wirkungsgrads der aus Magnetanker und Ankergegenstück bestehenden Stelleinrichtung führen. Die genaue Führung kann beispielsweise durch ein genaues Einpassen des Magnetankers in eine Magnetankerführung, beispielsweise von einem Gehäuse der Elektromagneteinrichtung gebildet, realisiert sein. Andererseits muss der Magnetanker jedoch auch möglichst einfach, also ohne großen Kraftaufwand, verlagerbar sein. Somit müssen bei der Herstellung der Elektromagneteinrichtung sehr geringe Toleranzen realisiert werden, um zum einen die Tauchstufe und zum anderen eine leichtgängige Verlagerung des Magnetankers zu ermöglichen. Daraus resultieren jedoch hohe Herstellungskosten.

Aus dem Stand der Technik ist beispielsweise die Druckschrift WO 01/36243 A1 bekannt. Diese betrifft ein Elektromagnetventil, mit einem Ventilgehäuse, in dem ein Ventilschließglied beweglich geführt ist, mit einem an dem Ventilschließglied angebrachten Magnetanker, der in Abhängigkeit von der elektromagnetischen Erregung einer am Ventilgehäuse angebrachten Ventilspule eine Hubbewegung in Richtung eines im Ventilgehäuse angeordneten Magnetkerns vollzieht sowie mit einer Feder, die in der elektromagnetisch nicht erregten Ventilstellung den Magnetanker in einem definierten Axialabstand vom Magnetkern positioniert, sodass der Magnetanker vom Magnetkern durch einen Zwischenraum getrennt ist. Zusätzlich zur Feder wirkt ein Federelement auf den Magnetanker ein, das einen nicht linearen, vorzugsweise progressiven Kennlinienverlauf aufweist, wobei das Federelement der Magnetkraft entgegenwirkt. Weiterhin zeigt der Stand der Technik die Druckschrift GB 2 258 702 A.

Offenbarung der Erfindung

Demgegenüber weist die Elektromagneteinrichtung mit den in Anspruch 1 genannten Merkmalen den Vorteil auf, dass ein günstiger Magnetkraftverlauf (Magnetkraft über die Größe des Luftspalts beziehungsweise den Abstand von Magnetanker und Ankergegenstück) der Elektromagneteinrichtung bei gleichzeitig geringen Herstellungskosten erzielt wird. Unter einem günstigen Magnetkraftverlauf ist dabei insbesondere ein stetiger und kontinuierlicher Verlauf der Magnetkraft über die Größe des Luftspalts zu verstehen. Diese Vorteile werden erfindungsgemäß erreicht, indem der Hauptschluss in der wenigstens einen Stellung von Magnetanker und Ankergegenstück zueinander eine geringere Reluktanz aufweist als der über die Scheibe verlaufende Nebenschluss, wobei die Ankergegenstückstirnseite bereichsweise konkav ist und zur Verringerung der Reluktanz des Hauptschlusses mindestens einen der Magnetankerstirnseite entgegentretenden Vorsprung aufweist.

Grundsätzlich ist vorgesehen, dass in dem Luftspalt eine mit der Magnetankerstirnseite und der Ankergegenstückstirnseite zumindest bereichsweise in Berührkontakt bringbare, aus einem magnetisierbaren Material bestehende Scheibe angeordnet ist, und dass in zumindest einer Stellung von Magnetanker und Ankergegenstück zueinander ein wenigstens bereichsweise über die Scheibe verlaufender magnetischer Nebenschluss vorgesehen ist, wobei der Hauptschluss in der wenigstens einen Stellung von Magnetanker und Ankergegenstück zueinander, vorzugsweise in jeder Stellung, eine geringere Reluktanz aufweist als der über die Scheibe verlaufende Nebenschluss. Es wird also weder, wie aus dem Stand der Technik bekannt, der Luftspalt vergrößert, noch wird eine Tauchstufe, welche anspruchsvolle Toleranzanforderungen bedingt, vorgesehen. Diese Maßnahmen können jedoch selbstverständlich zusätzlich vorgesehen sein. In axialer Richtung der Elektromagneteinrichtung gesehen, liegt die Scheibe zwischen dem Magnetanker und dem Ankergegenstück vor. Anders ausgedrückt ist in dem Luftspalt eine in mindestens einer Stellung von Magnetanker und Ankergegenstück mit der Magnetankerstirnseite und/oder der Ankergegenstückstirnseite zumindest bereichsweise in Berührkontakt stehende Scheibe angeordnet.

Die Scheibe kann dabei eine zentrale Ausnehmung beziehungsweise Öffnung aufweisen, welche insbesondere zur Aufnahme eines Federelements der Elektromagneteinrichtung und/oder eines Zwischenelements dient, welches zur Herstellung eines Stützkontakts mit dem Ankergegenstück vorgesehen ist und auf seiner dem Ankergegenstück abgewandten Seite mit einem Federelement in Wirkverbindung steht. Das Federelement kann dabei dazu vorgesehen sein, eine Federkraft zu bewirken, welche der mittels der Elektromagneteinrichtung erzeugbaren Magnetkraft entgegenwirkt. Üblicherweise ist das Federelement dazu vorgesehen, die Federkraft derart zu bewirken, dass der Magnetanker und das Ankergegenstück voneinander weg gedrängt werden. Die Scheibe besteht vorzugsweise aus einem gut magnetisierbaren Werkstoff, beispielsweise einem Metall, und ist insbesondere dazu vorgesehen, den in dem Luftspalt vorliegenden magnetischen Fluss zu übertragen. Stehen sowohl die Magnetankerstirnseite als auch die Ankergegenstückstirnseite in Berührkontakt mit der Scheibe, liegt in diesem Fall der magnetische Nebenschluss vor, durch welchen die Stellbarkeit der Elektromagneteinrichtung verbessert wird. Dabei soll die Scheibe jedoch vorzugsweise der relativen Verlagerung von Magnetanker und Ankergegenstück zueinander eine möglichst geringe Kraft entgegensetzen. Aus diesem Grund ist die Scheibe idealerweise mit geringem Kraftaufwand in axialer Richtung verformbar, weist also eine geringe Steifigkeit in diese Richtung auf. Die Scheibe besteht demnach insbesondere aus einem biegeweichen Material. Nichtsdestotrotz soll die Scheibe derart elastisch sein, dass die Verformung bei Wegfall der verformenden Kraft rückgängig gemacht wird, die Scheibe also die entsprechende Rückstellkraft bereitstellt beziehungsweise die entsprechende Elastizität aufweist.

Dabei soll der Hauptschluss in der wenigstens einen Stellung von Magnetanker und Ankergegenstück zueinander, vorzugsweise in jeder Stellung, eine geringere Reluktanz aufweisen als der über beziehungsweise durch die Scheibe verlaufende Nebenschluss. Der magnetische Hauptschluss der Elektromagneteinrichtung zwischen Magnetanker und Ankergegenstück liegt über den Luftspalt hinweg vor. Zusätzlich kann er wenigstens bereichsweise und/oder teilweise auch in der Scheibe vorliegen. Der über die Scheibe verlaufende Nebenschluss liegt dagegen nur dann (insbesondere in nennenswerter Stärke) vor, wenn die Scheibe sowohl mit der Magnetankerstirnseite und der Ankergegenstückstirnseite in Berührkontakt steht. Zumindest in der wenigstens einen Stellung von Magnetanker und Ankergegenstück, in welcher dies der Fall ist, soll der Hauptschluss eine geringere Reluktanz, also einen geringeren magnetischen Widerstand aufweisen als der Nebenschluss. Die die Verlagerung von Magnetanker und Ankergegenstück relativ zueinander bewirkende Magnetkraft wird durch den Hauptschluss bewirkt und bei Vorliegen des Nebenschlusses durch diesen ergänzt. Steht demnach die Scheibe sowohl mit der Magnetankerstirnseite als auch der Ankergegenstückstirnseite in Berührkontakt, so wird die Magnetkraft von dem Hauptschluss und dem Nebenschluss gemeinsam bewirkt. Bedingt durch die geringere Reluktanz des Hauptschlusses, also dem geringeren magnetischen Widerstand, ist dabei der von dem Hauptschluss bewirkte Anteil der Magnetkraft deutlich größer als der von dem Nebenschluss bewirkte Anteil. Auf diese Weise wird ein toleranzunabhängiger und stetiger beziehungsweise kontinuierlicher Magnetkraftverlauf erreicht. Dies ist auch dann der Fall, wenn es nicht vorgesehen ist, dass der Berührkontakt zwischen der Scheibe und der Magnetankerstirnseite und der Ankergegenstückstirnseite in jeder Stellung von Magnetanker und Ankergegenstück zueinander vorliegt. Vielmehr ist eine Elektromagneteinrichtung realisierbar, bei welcher die Scheibe nicht in jeder Stellung in Berührkontakt mit beiden Stirnseiten steht, ohne den Verlauf der Magnetkraft allzu negativ zu beeinflussen.

Eine Weiterbildung der Erfindung sieht vor, dass der Hauptschluss im Wesentlichen in axialer Richtung und/oder der Nebenschluss zumindest im Bereich der Scheibe im Wesentlichen in radialer Richtung vorliegen. Die Magnetfeldlinien des Hauptschlusses durchlaufen demnach den Luftspalt in axialer Richtung, während die Magnetfeldlinien des Nebenschlusses zumindest soweit sie in der Scheibe vorliegen, in radialer Richtung verlaufen. Die Magnetankerstirnseite und/oder die Ankergegenstückstirnseite sind wenigstens bereichsweise konkav, konvex, kegelförmig oder kegelstumpfförmig sind. Prinzipiell können die Magnetankerstirnseite und die Ankergegenstückstirnseite beliebig ausgestaltet sein. Bevorzugt weisen sie jedoch eine der genannten Formen auf und sind dabei gegensinnig ausgebildet. Die Magnetankerstirnseite bildet also zumindest bereichsweise ein Gegenstück zu einem Bereich der Ankergegenstückstirnseite beziehungsweise umgekehrt. Beispielsweise verläuft die Magnetankerstirnseite parallel zu der Ankergegenstückstirnseite, so dass der Abstand zwischen ihnen, das heißt die Größe des Luftspalts, an jedem Punkt - in radialer Richtung gesehen - im Wesentlichen gleich ist. Die Erfindung sieht vor, dass die Magnetankerstirnseite und/oder die Ankergegenstückstirnseite zur Verringerung der Reluktanz des Hauptschlusses mindestens einen der jeweils anderen Stirnseite entgegentretenden Vorsprung aufweisen. In dem Bereich des Vorsprungs kann die Magnetankerstirnseite beziehungsweise die Ankergegenstückstirnseite dabei von ihrer eigentlichen Form abweichen, so dass sie ihr nicht mehr konkav, konvex, kegelförmig beziehungsweise kegelstumpfförmig oder dergleichen sind. Die Reluktanz wird anhand der Beziehung

$$R_m = \frac{l}{\mu_0 \mu_r A}$$

bestimmt, wobei l eine Länge, in diesem Fall der Abstand zwischen der Magnetankerstirnseite und der Ankergegenstückstirnseite, A der entsprechende Querschnitt, $\mu_0$ die magnetische Feldkonstante und $\mu_r$ die Permeabilitätszahl sind. Mit einer zumindest bereichsweisen Verringerung des (maximalen) Abstandes zwischen Ankergegenstückstirnseite und Magnetankerstirnseite lässt sich demnach die Reluktanz des Hauptschlusses verringern. Zu diesem Zweck ist der mindestens eine Vorsprung vorgesehen, welcher ausgehend von der Magnetankerstirnseite beziehungsweise der Ankergegenstückstirnseite der jeweils anderen Stirnseite entgegentritt. Auf diese Weise wird zumindest bereichsweise der Abstand zwischen der Magnetankerstirnseite und der Ankergegenstückstirnseite und somit die Reluktanz verringert.

Eine Weiterbildung der Erfindung sieht vor, dass der Vorsprung zentral angeordnet ist und/oder einen kreisförmigen Querschnitt aufweist. Besonders bevorzugt ist der Vorsprung zentral, also mittig, an der Magnetankerstirnseite beziehungsweise der Ankergegenstückstirnseite angeordnet. Auf diese Weise wird unter anderem eine ideale Massenverteilung des Magnetankers beziehungsweise des Ankergegenstücks erreicht. Sind mehrere Vorsprünge vorgesehen, so ist unter einer zentralen Anordnung eine Anordnung zu verstehen, bei welcher die Vorsprünge um einen Mittelpunkt (beispielsweise den Schnittpunkt einer Längsachse der Elektromagneteinrichtung mit der Magnetankerstirnseite beziehungsweise der Ankergegenstückstirnseite) herum angeordnet sind. Beispielsweise weist der Vorsprung einen kreisförmigen Querschnitt auf, es kann jedoch auch jede beliebige andere Form vorgesehen sein.

Eine Weiterbildung der Erfindung sieht vor, dass der Berührkontakt zwischen der Scheibe und der Magnetankerstirnseite sowie der Ankergegenstückstirnseite in jeder Stellung von Magnetanker und Ankergegenstück zueinander vorliegt. Der Berührkontakt zwischen der Scheibe und dem Magnetanker und/oder dem Ankergegenstück beziehungsweise der jeweiligen Stirnseite liegt demnach stets vor. In keiner Stellung von Magnetanker und Ankergegenstück kommt es zu einem Abheben der Scheibe von der Magnetankerstirnseite beziehungsweise der Ankergegenstückstirnseite. Besonders vorteilhaft ist es, wenn die Scheibe in jeder Stellung sowohl mit der Magnetankerstirnseite als auch der Ankergegenstückstirnseite in Berührkontakt steht. Auf diese Weise wird ein unstetiger Verlauf der Magnetkraft über verschiedene Stellungen von Magnetanker und Ankergegenstück zueinander vermieden. Tritt dagegen der Berührkontakt nur bei bestimmten Stellungen auf, so wird sich im Magnetkraftverlauf über die Größe des Luftspalts ein Knickpunkt einstellen beziehungsweise eine Unstetigkeit auftreten. Diese ist durch den eintretenden metallischen Kontakt verursacht, über welchen der eigentlich erwünschte magnetische Nebenschluss vorliegt. Eine derartige Unstetigkeit soll vermieden werden. Ihre Lage wäre von Toleranzen der Elektromagneteinrichtung abhängig, könnte also von Elektromagneteinrichtung zu Elektromagneteinrichtung streuen und sich eventuell auch während eines Betriebs der Elektromagneteinrichtung verändern. Sie wäre somit regelungs- beziehungsweise steuerungstechnisch allenfalls mit einer aufwändigen Kalibrierung, welche wiederum kostenträchtig ist, zu beherrschen.

Es soll jedoch ausdrücklich darauf hingewiesen werden, dass eine Vorhubvariante der Elektromagneteinrichtung, bei welcher der Berührkontakt nicht in jeder Relativposition von Magnetanker und Ankergegenstück zueinander vorliegt, ebenfalls ohne weiteres realisiert werden kann. Bei einer solchen Vorhubvariante müssen Magnetanker und Ankergegenstück zunächst um eine bestimmte Strecke aufeinander zu bewegt werden, bevor der Berührkontakt zwischen Magnetanker, Ankergegenstück und der Scheibe zu Stande kommt. Diese Ausführungsform wird insbesondere durch die geringere Reluktanz des Hauptschlusses gegenüber dem Nebenschluss ermöglicht. Diese niedrigere Reluktanz bewirkt, dass die durch den Hauptschluss bewirkte Magnetkraft stets größer ist als die von dem Nebenschluss hervorgerufene. Auf diese Weise tritt die vorstehend beschriebene Unstetigkeit nicht oder zumindest lediglich in stark verringerter Ausprägung auf.

Eine Weiterbildung der Erfindung sieht vor, dass der Berührkontakt zwischen der Scheibe und der Magnetankerstirnseite an mindestens einer ersten Berührstelle und der Berührkontakt zwischen der Scheibe und der Ankergegenstückstirnseite an mindestens einer zweiten Berührstelle vorliegt, wobei die Berührstellen in radialer Richtung unterschiedlich, insbesondere nicht überlappend, angeordnet sind. Die Berührstellen können dabei punktförmig beziehungsweise flächig vorliegen. Von Bedeutung ist lediglich, dass sie in radialer Richtung an unterschiedlichen Positionen vorliegen. Beispielsweise ist die erste Berührstelle an einer ersten Radialposition und die zweite Berührstelle an einer - bezüglich der ersten Radialposition - weiter außen liegenden zweiten Radialposition vorgesehen. Besonders vorteilhaft ist es dabei, wenn sich die Berührstellen in radialer Richtung nicht überlappen, also in radialer Richtung voneinander beabstandet sind. Beispielsweise liegen die mindestens eine erste Berührstelle auf einem Kreis mit einem ersten Radius und die mindestens eine zweite Berührstelle auf einem Kreis mit einem von dem ersten Radius verschiedenen zweiten Radius. Je weiter die Berührstellen in radialer Richtung voneinander beabstandet sind, umso geringer ist die von der Federscheibe auf den Magnetanker beziehungsweise das Ankergegenstück ausgeübte Federkraft, wenn Magnetanker und Ankergegenstück aufeinander zu verlagert werden.

Eine Weiterbildung der Erfindung sieht vor, dass die Elektromagneteinrichtung ein Magnetventil ist, wobei der Magnetanker mit einem Dichtelement des Magnetventils zu dessen Verlagerung wirkverbunden ist. Auf diese Weise wird bei einer Verlagerung des Magnetankers bezüglich des Ankergegenstücks auch das Dichtelement verlagert. Das Dichtelement ist üblicherweise dazu vorgesehen, eine Ventilöffnung des Magnetventils zu verschließen beziehungsweise freizugeben. Ist das Dichtelement zum Verschließen der Ventilöffnung angeordnet, so sitzt es üblicherweise in einem Ventilsitz des Magnetventils ein, welcher sowohl der Ventilöffnung als auch dem Dichtelement zugeordnet ist. Beispielsweise ist das Dichtelement in eine Ausnehmung des Magnetankers eingebracht und in dieser gehalten, wobei die Ausnehmung vorzugsweise auf einer dem Ankergegenstück abgewandten Seite des Magnetankers vorgesehen ist.

Eine Weiterbildung der Erfindung sieht vor, dass die Scheibe eine Öffnung aufweist, welche in radialer Richtung größere Abmessungen aufweist als der Vorsprung. Insofern ist in radialer Richtung keine Überlappung von dem Vorsprung und der Öffnung der Scheibe gegeben. Die Öffnung durchgreift die Scheibe vorzugsweise in axialer Richtung vollständig. Sie ist insbesondere zur bereichsweisen Aufnahme des Federelements oder des Zwischenelements vorgesehen.

Die Erfindung betrifft weiterhin eine Fahrerassistenzeinrichtung, insbesondere ABS-, TCS- oder ESP-Einrichtung, mit mindestens einer als Magnetventil ausgebildeten Elektromagneteinrichtung, insbesondere gemäß den vorstehenden Ausführungen, wobei die Elektromagneteinrichtung einen Magnetanker und ein stirnseitig des Magnetankers angeordnetes Ankergegenstück aufweist, wobei Magnetanker und Ankergegenstück relativ zueinander verlagerbar sind und zwischen einer Magnetankerstirnseite und einer Ankergegenstückstirnseite ein Luftspalt vorgesehen ist, über welchen ein magnetischer Hauptschluss der Elektromagneteinrichtung vorliegt. Dabei ist vorgesehen, dass in dem Luftspalt eine mit der Magnetankerstirnseite und der Ankergegenstückstirnseite zumindest bereichsweise in Berührkontakt bringbare, aus einem magnetisierbaren Material bestehende Scheibe angeordnet ist, und dass in zumindest einer Stellung von Magnetanker und Ankergegenstück zueinander ein wenigstens bereichsweise über die Scheibe verlaufender magnetischer Nebenschluss vorgesehen ist, wobei der Hauptschluss in wenigstens einer Stellung von Magnetanker und Ankergegenstück zueinander, vorzugsweise in jeder Stellung, eine geringere Reluktanz aufweist als der über die Scheibe verlaufende Nebenschluss, wobei die Ankergegenstückstirnseite bereichsweise konkav ist und zur Verringerung der Reluktanz des Hauptschlusses mindestens einen der Magnetankerstirnseite entgegentretenden Vorsprung aufweist. Die Elektromagneteinrichtung kann gemäß den vorstehenden Ausführungen weitergebildet sein.

Die Erfindung wird anhand der in der Zeichnung dargestellten Ausführungsbeispiele näher erläutert, ohne dass eine Beschränkung der Erfindung erfolgt. Dabei zeigen:

> Figur 1 eine Seitenschnittansicht einer als Magnetventil ausgebildeten Elektromagneteinrichtung mit einer zwischen einem Magnetanker und einem Ankergegenstück angeordneten Scheibe,

> Figur 2 die Elektromagneteinrichtung in einer zweiten Ausführungsform, und

> Figur 3 eine Detailschnittansicht der aus der Figur 2 bekannten Elektromagneteinrichtung im Bereich der Scheibe.

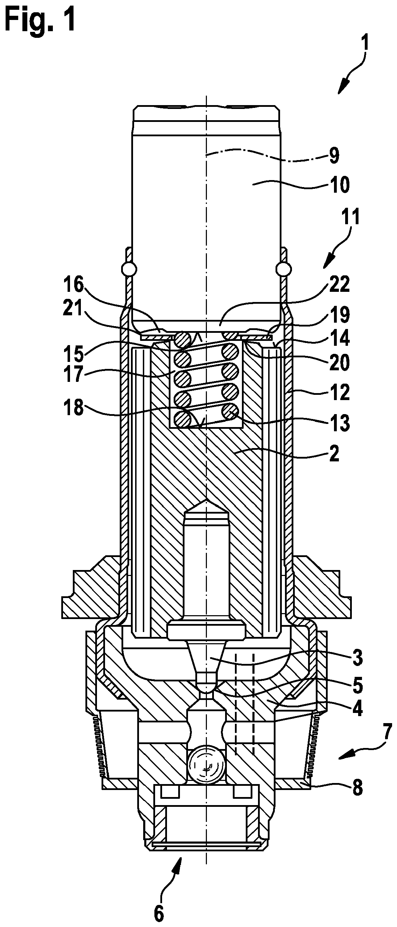

Die Figur 1 zeigt eine als Magnetventil ausgebildete Elektromagneteinrichtung 1, wobei das Magnetventil beispielsweise Bestandteil einer hier nicht dargestellten Fahrerassistenzeinrichtung ist. Die Elektromagneteinrichtung 1 weist einen Magnetanker 2 auf, welcher mit einem Dichtelement 3 des Magnetventils wirkverbunden ist. Das Dichtelement 3 wirkt mit einem in einem Ventilkörper 4 ausgebildeten Ventilsitz 5 zusammen, um eine Strömungsverbindung zwischen einem Auslassanschluss 6 und einem Einlassanschluss 7 des Magnetventils freizugeben beziehungsweise zu unterbrechen. Dem Einlassanschluss 7 ist in dem hier dargestellten Ausführungsbeispiel ein Filter 8 zugeordnet. Zusätzlich oder alternativ kann selbstverständlich auch dem Auslassanschluss 6 ein Filter (hier nicht dargestellt) zugeordnet sein. Die hier dargestellte Elektromagneteinrichtung 1 ist entsprechend der Anordnung von Auslassanschluss 6 und Einlassanschluss 7 für eine radiale Anströmung und eine axiale Abströmung (bezüglich einer Längsachse 9 der Elektromagneteinrichtung 1) ausgelegt. Selbstredend kann jedoch die Anströmungsrichtung beziehungsweise die Abströmungsrichtung beliebig vorgesehen sein, also der Auslassanschluss 6 als Einlassanschluss und Auslassanschluss 7 als Einlassanschluss verwendet werden.

Neben dem Magnetanker 2 weist die Elektromagneteinrichtung 1 ein Ankergegenstück 10 auf, welches zusammen mit dem Magnetanker 2 eine Stelleinrichtung 11 der Elektromagneteinrichtung 1 bildet. Das Ankergegenstück 10 ist beispielsweise als Polkern ausgebildet und weist zumindest eine elektrische Spule auf, so dass mittels des Ankergegenstücks 10 durch Anlegen einer Spannung an die Spule (also durch Bestromung der Elektromagneteinrichtung 1) eine Magnetkraft auf den Magnetanker 2 ausgeübt werden kann. Der Magnetanker 2 ist bezüglich der Längsachse 9 axial verschieblich gelagert, wobei die Lagerung insbesondere mittels eines Gehäuses 12 der Elektromagneteinrichtung 1 realisiert ist. An dem Gehäuse 12 sind dabei auch das Ankergegenstück 10 und der Ventilkörper 4 ortsfest gehalten. Somit kann der Magnetanker 2, beeinflusst durch die mittels des Ankergegenstücks 10 erzeugte Magnetkraft, relativ bezüglich des Magnetankers 2 beziehungsweise des Ventilkörpers 4 in axialer Richtung verlagert werden. Das Magnetventil, welches in der Figur 1 dargestellt ist, ist ein stromlos geschlossenes Magnetventil. Das bedeutet, dass das Dichtelement 3 dichtend in dem Ventilsitz 5 einsitzt, solange das Magnetventil nicht bestromt ist, also keine Magnetkraft mittels des Ankergegenstücks 10 erzeugt wird.

Zwischen dem Magnetanker 2 und dem Ankergegenstück 10 ist ein Federelement 13 angeordnet. Das Federelement 13 durchgreift einen von einer Magnetankerstirnseite 14 und einer Ankergegenstückstirnseite 15 in axialer Richtung begrenzten Luftspalt 16. Das Federelement 13 stützt sich in dem hier dargestellten Ausführungsbeispiel auf der Ankergegenstückstirnseite 15 ab. Auf seiner dem Ankergegenstück 10 abgewandten Seite sitzt es bereichsweise in einer Ausnehmung 17 des Ankergegenstücks 10, welche als zentrale Bohrung ausgebildet ist, ein. Dabei stützt es sich auf einem Grund 18 der Ausnehmung 17 ab. Das Federelement 13 bewirkt eine zwischen dem Magnetanker 2 und dem Ankergegenstück 10 wirkende Federkraft. Weil das Ankergegenstück 10 ortsfest angeordnet ist, drängt diese Federkraft den Magnetanker 2 und damit auch das Dichtelement 3 in Richtung des Ventilsitzes 5. Wird das Magnetventil bestromt, wirkt also auf den Magnetanker 2 die entsprechende, in dem hier dargestellten Ausführungsbeispiel in Richtung des Ankergegenstücks 10 gerichtete Magnetkraft, so wird der Magnetanker 2 auf das Ankergegenstück 10 zubewegt. Dabei ist die bewirkte Magnetkraft zunächst größer als die Federkraft des Federelements 13. Bedingt durch die Bewegung des Magnetankers 2 wird das Federelement 13 weiter gespannt, die Federkraft nimmt demnach zu. Entfällt die Magnetkraft, so bewirkt die Federkraft, dass der Magnetanker 2 wieder von dem Ankergegenstück 10 fort gedrängt wird.

Um die Stellbarkeit des Magnetventils zu verbessern, ist in dem Luftspalt 16, welcher zwischen dem Magnetanker 2 und dem Ankergegenstück 10 beziehungsweise zwischen der Magnetankerstirnseite 14 und Ankergegenstückstirnseite 15 vorliegt, eine Scheibe 19 derart angeordnet, dass sie mit der Magnetankerstirnseite 14 und Ankergegenstückstirnseite 15 zumindest bereichsweise in Berührkontakt bringbar ist. Bei dem in der Figur 1 dargestellten Magnetventil ist es vorgesehen, dass der Berührkontakt in jeder Relativposition beziehungsweise Stellung von Magnetanker 2 und Ankergenstück 10 zueinander vorliegt. Alternativ kann es auch derart ausgebildet sein, dass der Berührkontakt lediglich in einer Stellung oder einigen Stellungen vorliegt.

Die Magnetankerstirnseite 14 ist zumindest bereichsweise konvex ausgebildet, wölbt sich also in Richtung des Ankergegenstücks 10. Die Ankergegenstückstirnseite 15 ist dagegen zumindest bereichsweise konkav ausgebildet, weist also eine nach innen gerichtete Wölbung auf. Der Berührkontakt zwischen der Magnetankerstirnseite 14 der Scheibe 19 liegt an einer ersten Berührstelle 20 vor. Eine zweite Berührstelle 21, zwischen welchen ein Berührkontakt zwischen der Ankergegenstückstirnseite 15 und der Scheibe 19 vorliegt, ist in radialer Richtung weiter außen liegend als die erste Berührstelle 20 vorgesehen. Die Berührstellen 20 und 21 sind dabei in radialer Richtung voneinander beabstandet, so dass keine Überlappung zwischen ihnen vorliegt.

Über den Luftspalt 16 liegt ein magnetischer Hauptschluss der Elektromagneteinrichtung 1 vor. Neben diesem Hauptschluss ist in zumindest einer Stellung von Magnetanker 2 und Ankergegenstück 10 zueinander ein wenigstens bereichsweise über die Scheibe 19 verlaufender magnetischer Nebenschluss vorgesehen. Der Nebenschluss liegt dabei vor, wenn die Scheibe 19 sowohl mit der Magnetankerstirnseite 14 als auch mit der Ankergegenstückstirnseite 15 in Berührkontakt steht. Der Nebenschluss liegt demnach über die erste Berührstelle 20, die Scheibe 19 und die zweite Berührstelle 21 vor. Dabei verlaufen Magnetfeldlinien des Hauptschlusses im Wesentlichen in axialer Richtung zwischen dem Magnetanker 2 und dem Ankergegenstück 10. Die Magnetfeldlinien des Nebenschlusses verlaufen dagegen wenigstens im Bereich der Scheibe 19 in radialer Richtung. Um eine bessere Stellbarkeit der Elektromagneteinrichtung 1 zu erzielen, weist der Hauptschluss in der wenigstens einen Stellung von Magnetanker 2 und Ankergegenstück 10 zueinander eine geringere Reluktanz auf als der Nebenschluss. Dies wird im Wesentlichen durch eine entsprechende Anpassung der Magnetankerstirnseite 14 und/oder der Ankergegenstückstirnseite 15 erzielt. In der hier vorliegenden Ausführungsform weist die Ankergegenstückstirnseite 15 einen Vorsprung 22 auf, welcher der Magnetankerstirnseite 14 entgegentritt. Im Bereich des Vorsprungs 22 weicht die Ankergegenstückstirnseite 15 insofern von ihrer konkaven Ausgestaltung ab. Der Vorsprung 22 ist zentral an der Ankergegenstückstirnseite 15 vorgesehen. Er kann einen kreisförmigen Querschnitt aufweisen, alternativ sind jedoch auch andere Querschnittsformen möglich. Der Vorsprung 22 bewirkt eine zumindest bereichsweise Reduzierung des Abstandes zwischen der Magnetankerstirnseite 14 und der Ankergegenstückstirnseite 15. Auf diese Weise wird im Bereich des Vorsprungs 22 der von dem Hauptschluss bewirkte Anteil der Magnetkraft vergrößert. Gegenüber dieser ist der von dem Nebenschluss bewirkte Anteil der Magnetkraft klein.

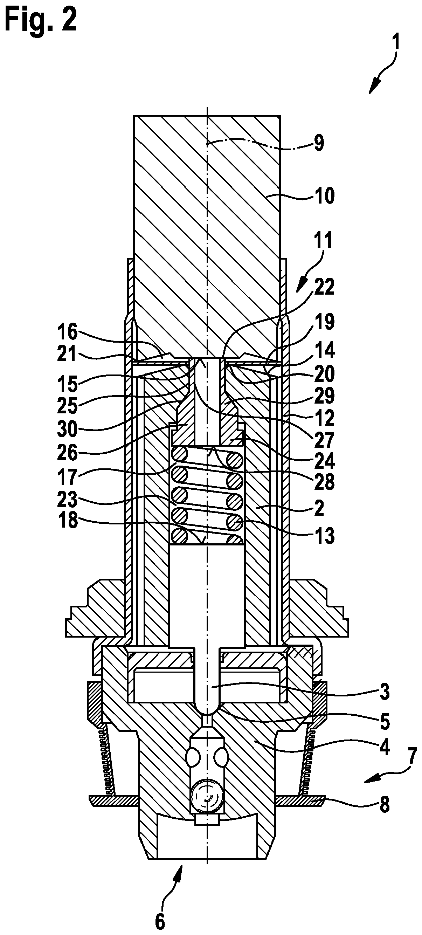

Die Figur 2 zeigt eine weitere Ausführungsform der Elektromagneteinrichtung 1. Grundsätzlich entspricht das Ausführungsbeispiel der Figur 2 dem in der Figur 1 gezeigten, so dass insofern grundsätzlich auf die vorstehenden Ausführungen verwiesen sei. Bei dem hier gezeigten Ausführungsbeispiel ist jedoch, um die Einstellbarkeit während der Herstellung der Elektromagneteinrichtung 1 zu verbessern, in einer Führungsausnehmung 23 des Magnetankers 2 ein Zwischenelement 24 angeordnet. Die Führungsausnehmung 23 wird dabei im Wesentlichen von der Ausnehmung 17 gebildet. Das Zwischenelement 24 ist axial beweglich gelagert und kann mit dem Ankergegenstück 10 in Stützkontakt treten. Neben der Führungsausnehmung 23 weist der Magnetanker 2 eine Durchgangsöffnung 25 auf, wobei die Führungsausnehmung 23 und die Durchgangsöffnung 25 vorzugsweise beide von der Ausnehmung 17, welche als Stufenbohrung ausgebildet sein kann, gebildet sind. Die Durchgangsöffnung 25 weist einen kleineren Querschnitt auf als die Führungsausnehmung 23, insbesondere also einen geringeren Durchmesser. Gleichzeitig besteht das Zwischenelement 24 aus einem Führungsabschnitt 26 und einem Durchgangsabschnitt 27. Der Führungsabschnitt 26 ist in der Führungsausnehmung 23 angeordnet, während der Durchgangsabschnitt 27 bereichsweise in der Durchgangsöffnung 25 vorliegt. Der Führungsabschnitt 26 weist dabei einen größeren Querschnitt auf, insbesondere einen größeren Durchmesser, als der Durchgangsabschnitt 27. Insofern ist in dem Magnetanker 2 ein Endanschlag für das Zwischenelement 24 gebildet. Der Endanschlag verhindert, dass das Zwischenelement 24 in Richtung des Ankergegenstücks 10 aus dem Magnetanker 2 beziehungsweise der Ausnehmung 17 heraus gelangen kann. Durch die geringeren Abmessungen des Durchgangsabschnitts 27 im Vergleich zu dem Führungsabschnitt 26 steht nahezu die gesamte Polfläche (in Form der Oberfläche der Ankergegenstückstirnseite 15) zur Übertragung der Magnetkraft zur Verfügung.

Auf der dem Zwischenelement 24 abgewandten Seite des Magnetankers 2 ist in der Ausnehmung 17 das Dichtelement 3 eingepresst, so dass es in dieser klemmend gehalten ist. Das Dichtelement 3 weist auf seiner dem Ventilsitz 5 abgewandten Seite eine Stützfläche auf, welche den Grund 18 der Ausnehmung 17 bildet. Auf diesem Grund 18 stützt sich wiederum das Federelement 13 auf. Das Federelement 13 ist dabei zwischen dem Dichtelement 3 und dem Zwischenelement 24 angeordnet. Es weist eine Auflagefläche 28 für das Federelement 13 auf. Bei der hier vorgestellten Ausführungsform der Elektromagneteinrichtung 1 kann eine Vorspannung des Federelements 13, welches beispielsweise als Spiralfeder ausgebildet ist, über ein Einpressen des Dichtelements 3 in den Magnetanker 2 eingestellt werden. In dem Bereich der Durchgangsöffnung 25, welche von dem Zwischenelement 24 durchgriffen ist, sind die Abmessungen der Durchgangsöffnung 22 reduziert, insbesondere derart an die Abmessungen des Zwischenelements 24 angepasst, dass eine Radialführung für dieses ausgebildet ist.

Das Federelement 13 bewirkt eine auf das Zwischenelement 24 wirkende Federkraft, wobei es sich auf dem bezüglich des Magnetankers 2 ortsfest angeordneten Dichtelement 3 abstützt. Wird die Elektromagneteinrichtung 1 bestromt, wirkt also auf den Magnetanker 2 die entsprechende, in dem hier dargestellten Ausführungsbeispiel in Richtung des Ankergegenstücks 10 gerichtete Magnetkraft, so wird der Magnetanker 2 auf das Ankergegenstück 10 zubewegt. Sobald der Magnetanker 2 eine Stellung bezüglich des Ankergegenstücks 10 erreicht hat, bei welcher das Zwischenelement 24 in Berührkontakt beziehungsweise Stützkontakt mit dem Ankergegenstück 10 steht, wird das Zwischenelement 24 in die Führungsausnehmung 23 hinein verlagert, also auf das Dichtelement 3 zu. Dabei wird das Federelement 13 gespannt. Entfällt die Magnetkraft, so bewirkt die Federkraft, dass der Magnetanker 2 wieder von dem Ankergegenstück 10 fort gedrängt wird. In der hier vorgeschlagenen Ausführungsform wird also das Rückstellen des Magnetankers 2 mittels des Zwischenelements 24 realisiert, wobei das Zwischenelement 24 ständig mit dem Ankergegenstück 10 in Stützkontakt steht. Es kann jedoch ebenso vorgesehen sein, dass ein weiteres Federelement (hier nicht dargestellt) zum Rückstellen verwendet wird. Insbesondere in diesem Fall kann das Zwischenelement 24 in zumindest einer Stellung des Magnetankers 2 zu dem Ankergegenstück 10 beabstandet sein und erst bei einem Aufeinanderzubewegen von Magnetanker 2 und Ankergegenstück 10 mit dem Ankergegenstück 10 in Stützkontakt treten.

Die Figur 2 zeigt auch, dass das Zwischenelement 24 zumindest bereichsweise konusförmig ausgebildet ist, also einen konusförmigen Bereich 29 aufweist. Dieser liegt in dem Führungsabschnitt 26 vor und dient insbesondere einer Abmessungsreduzierung bis auf die in dem Durchgangsabschnitt 27 vorliegenden Abmessungen. Gleichzeitig weist die Führungsausnehmung 23 auf ihrer der Durchgangsöffnung 25 zugewandten Seite einen Querschnittsverringerungsbereich 30 auf. Diese ist vorzugsweise ebenfalls zumindest bereichsweise konusförmig, vorzugsweise vollständig konusförmig, ausgebildet. Unter einem Konus ist dabei ein Kegel oder ein Kegelstumpf, besonders bevorzugt ein Kreiskegel oder ein Kreiskegelstumpf, zu verstehen. Die Elektromagneteinrichtung 1 ist vorzugsweise derart ausgebildet, dass der konusförmige Bereich 29 des Zwischenelements 24 in zumindest einer Stellung von Magnetanker 2 und Ankergegenstück 10 zueinander zumindest bereichsweise in dem Querschnittsverringerungsbereich 30 angeordnet ist. Dabei steht er in dieser Stellung vorzugsweise mit einer Wandung des Querschnittsverringerungsbereichs 30 in Berührkontakt. Bedingt durch die Konusform von Zwischenelement 24 und Querschnittsverringerungsbereich 30 bewirkt dieser Berührkontakt eine Zentrierung des Zwischenelements 24 bezüglich des Magnetankers 2. Insofern liegt ein Zentrierkontakt zwischen dem Zwischenelement 24 und dem Magnetanker 2 vor. Zusätzlich kann durch das Zusammenwirken des Zwischenelements 24 mit dem Querschnittsverringerungsbereich 30 ein Endanschlag für das Zwischenelement 24 realisiert sein, welcher ein Herausbewegen des Zwischenelements 24 aus der Ausnehmung 17 in Richtung des Ankergegenstücks 10 verhindert.

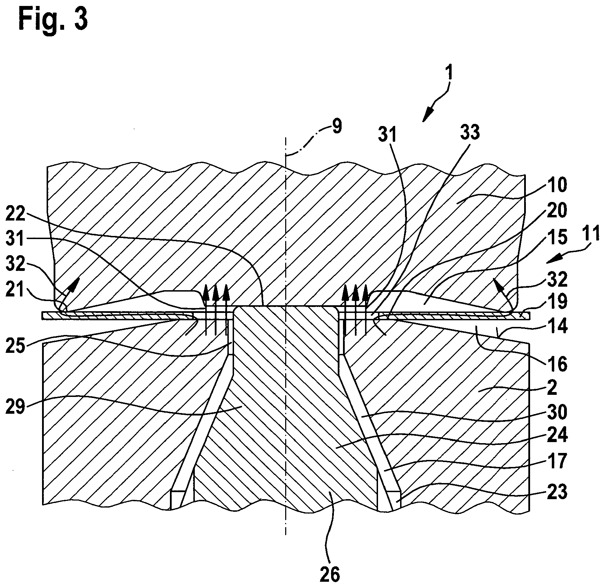

Die Figur 3 zeigt eine Detailschnittansicht der aus der Figur 2 bekannten Elektromagneteinrichtung 1. Insofern sei auf die vorstehenden Ausführungen verwiesen. Die Figur 3 deutet den Hauptschluss durch Pfeile 31 und den Nebenschluss durch Pfeile 32 an. Es wird nochmals deutlich, dass die Ankergegenstückstirnseite 15 zumindest bereichsweise konkav ist, wobei jedoch - bezüglich der Längsachse 9 - der zentral angeordnete Vorsprung 22 vorgesehen ist, welcher dem Magnetanker 2 entgegentritt. Die Scheibe 19 weist eine Öffnung 33 auf. Diese ist bevorzugt mit in radialer Richtung größeren Abmessungen ausgebildet als der Vorsprung 22. Bei einem Aufeinanderzubewegen von Magnetanker 2 und Ankergegenstück 10 kann es demnach nicht zu einem Berührkontakt zwischen dem Vorsprung 22 und der Scheibe 19 kommen.

## Patentansprüche

1. Elektromagneteinrichtung (1) mit einem Magnetanker (2) und einem stirnseitig des Magnetankers (2) angeordneten Ankergegenstück (10), wobei Magnetanker (2) und Ankergegenstück (10) relativ zueinander verlagerbar sind und zwischen einer Magnetankerstirnseite (14) und einer Ankergegenstückstirnseite (15) ein Luftspalt (16 vorgesehen ist, über welchen ein magnetischer Hauptschluss der Elektromagneteinrichtung (1) vorliegt, wobei in dem Luftspalt (16) eine mit der Magnetankerstirnseite (14) und der Ankergegenstückstirnseite (15) zumindest bereichsweise in Berührkontakt (20, 21) bringbare, aus einem magnetisierbaren Material bestehende Scheibe (19) angeordnet ist, und wobei in zumindest einer Stellung von Magnetanker (2) und Ankergegenstück (10) zueinander ein wenigstens bereichsweise über die Scheibe (19) verlaufender magnetischer Nebenschluss vorliegt, **dadurch gekennzeichnet, dass** der Hauptschluss in der wenigstens einen Stellung von Magnetanker (2) und Ankergegenstück (10) zueinander, vorzugsweise in jeder Stellung, eine geringere Reluktanz aufweist als der über die Scheibe (19) verlaufende Nebenschluss, wobei die Ankergegenstückstirnseite (15) bereichsweise konkav ist und zur Verringerung der Reluktanz des Hauptschlusses mindestens einen der Magnetankerstirnseite (14) entgegentretenden Vorsprung (22) aufweist.

**2.** Elektromagneteinrichtung nach Anspruch 1, **dadurch gekennzeichnet, dass** der Hauptschluss im Wesentlichen in axialer Richtung und/oder der Nebenschluss zumindest im Bereich der Scheibe (19) im Wesentlichen in radialer Richtung vorliegen.

**3.** Elektromagneteinrichtung nach einem der vorhergehenden Ansprüche, **dadurch gekennzeichnet, dass** die Magnetankerstirnseite (14) wenigstens bereichsweise konkav, konvex, kegelförmig oder kegelstumpfförmig sind.

**4.** Elektromagneteinrichtung nach einem der vorhergehenden Ansprüche, **dadurch gekennzeichnet, dass** die Magnetankerstirnseite (14) zur Verringerung der Reluktanz des Hauptschlusses mindestens einen der Ankergegenstückstirnseite (15) entgegentretenden Vorsprung (22) aufweisen.

**5.** Elektromagneteinrichtung nach einem der vorhergehenden Ansprüche, **dadurch gekennzeichnet, dass** der Vorsprung (22) zentral angeordnet ist und/oder einen kreisförmigen Querschnitt aufweist.

**6.** Elektromagneteinrichtung nach einem der vorhergehenden Ansprüche, **dadurch gekennzeichnet, dass** der Berührkontakt zwischen der Scheibe (19) und der Magnetankerstirnseite (14) sowie der Ankergegenstückstirnseite (15) in jeder Stellung von Magnetanker (2) und Ankergegenstück (10) zueinander vorliegt.

**7.** Elektromagneteinrichtung nach einem der vorhergehenden Ansprüche, **dadurch gekennzeichnet, dass** der Berührkontakt zwischen der Scheibe (19) und der Magnetankerstirnseite (14) an mindestens einer ersten Berührstelle (20) und der Berührkontakt zwischen der Scheibe (19) und der Ankergegenstückstirnseite (15) an mindestens einer zweiten Berührstelle (21) vorliegt, wobei die Berührstellen (20,21) in radialer Richtung unterschiedlich, insbesondere nicht überlappend, angeordnet sind.

**8.** Elektromagneteinrichtung nach einem der vorhergehenden Ansprüche, **dadurch gekennzeichnet, dass** die Elektromagneteinrichtung (1) ein Magnetventil ist, wobei der Magnetanker (2) mit einem Dichtelement (3) des Magnetventils zu dessen Verlagerung wirkverbunden ist.

**9.** Elektromagneteinrichtung nach einem der vorhergehenden Ansprüche, **dadurch gekennzeichnet, dass** die Scheibe (19) eine Öffnung (33) aufweist, welche in radialer Richtung größere Abmessungen aufweist als der Vorsprung (22).

**10.** Fahrerassistenzeinrichtung, insbesondere ABS-, TCS- oder ESP-Einrichtung, mit mindestens einer als Magnetventil ausgebildeten Elektromagneteinrichtung (1), wobei die Elektromagneteinrichtung (1) einen Magnetanker (2) und ein stirnseitig des Magnetankers (2) angeordnetes Ankergegenstück (10) aufweist, wobei Magnetanker (2) und Ankergegenstück (10) relativ zueinander verlagerbar sind und zwischen einer Magnetankerstirnseite (14) und einer Ankergegenstückstirnseite (15) ein Luftspalt (16) vorgesehen ist, über welchen ein magnetischer Hauptschluss der Elektromagneteinrichtung (1) vorliegt, wobei in dem Luftspalt (16) eine mit der Magnetankerstirnseite (14) und der Ankergegenstückstirnseite (15) zumindest bereichsweise in Berührkontakt bringbare, aus einem magnetisierbaren Material bestehende Scheibe (19) angeordnet ist, und wobei in zumindest einer Stellung von Magnetanker (2) und Ankergegenstück (10) zueinander ein wenigstens bereichsweise über die Scheibe (19) verlaufender magnetischer Nebenschluss vorliegt, **dadurch gekennzeichnet, dass** der Hauptschluss in der wenigstens einen Stellung von Magnetanker (2) und Ankergegenstück (10) zueinander, vorzugsweise in jeder Stellung, eine geringere Reluktanz aufweist als der über die Scheibe (19) verlaufende Nebenschluss, wobei die Ankergegenstückstirnseite (15) bereichsweise konkav ist und zur Verringerung der Reluktanz des Hauptschlusses mindestens einen der Magnetankerstirnseite (14) entgegentretenden Vorsprung (22) aufweist.

## Claims

**1.** Solenoid device (1) having a magnet armature (2) and an armature counterpiece (10) which is arranged at the end of the magnet armature (2), wherein the magnet armature (2) and the armature, counterpiece (10) can be moved in relation to one another, and an air gap (16), via which a magnetic series connection of the solenoid device (1) is present, is provided between a magnet armature end (14) and an armature counterpiece end (15), wherein a disk (19) which can be placed in contact at least in certain areas (20, 21) with the magnet armature end (14) and the armature counterpiece end (15) and is composed of a magnetizable material is arranged in the air gap (16), and wherein a magnetic shunt connection which extends at least in certain areas over the disk (19) is present, in at least one position of the magnet armature (2) and armature counterpiece (10) with respect to one another, **characterized in that** in the at least one position of the magnet armature (2) and armature counterpiece (10) with respect to one another, preferably in any position, the series connection has a lower reluctance than the shunt connection which extends over the disk (19), wherein the armature counterpiece end (15) is concave in certain areas and has, in order to reduce the reluctance of the series connection, at least one projection (22) which protrudes toward the magnet armature end (14).

2. Solenoid device according to Claim 1, **characterized in that** the series connection is present essentially in the axial direction, and/or the shunt connection is present essentially in the radial direction, at least in the region of the disk (19).

3. Solenoid device according to one of the preceding claims, **characterized in that** the magnet armature end (14) is, at least in certain areas, concave, convex, in the shape of a cone or in the shape of a frustum.

4. Solenoid device according to one of the preceding claims, **characterized in that** the magnet armature end (14) has, in order to reduce the reluctance of the series connection, at least one projection (22) which protrudes toward the armature counterpiece end (15).

5. Solenoid device according to one of the preceding claims, **characterized in that** the projection (22) is arranged centrally and/or has a circular cross section.

6. Solenoid device according to one of the preceding claims, **characterized in that** the contact between the disk (19) and the magnet armature end (14) as well as the armature counterpiece end (15) is present in every position of the magnet armature (2) and armature counterpiece (10) with respect to one another.

7. Solenoid device according to one of the preceding claims, **characterized in that** the contact between the disk (19) and the magnet armature end (14) is present at at least a first contact point (20), and the contact between the disk (19) and the armature counterpiece end (15) is present at at least a second contact point (21), wherein the contact points (20, 21) are arranged differently in the radial direction, in particular are arranged in a non-overlapping fashion.

8. Solenoid device according to one of the preceding claims, **characterized in that** the solenoid device (1) is a solenoid valve, wherein the magnet armature (2) is operatively connected to a sealing element (3) of the solenoid valve in order to move same.

9. Solenoid device according to one of the preceding claims, **characterized in that** the disk (19) has an opening (33) which has larger dimensions in the radial direction than the projection (22).

10. Driver assistance device, in particular ABS, TCS or ESP device, having at least one solenoid device (1) which is embodied as a solenoid valve, wherein the solenoid device (1) has a magnet armature (2) and an armature counterpiece (10) which is arranged at the end of the magnet armature (2), wherein the magnet armature (2) and the armature counterpiece (10) can be moved in relation to one another, and an air gap (16), via which a magnetic series connection of the solenoid device (1) is present, is provided between a magnet armature end (14) and an armature counterpiece end (15), wherein a disk (19) which can be placed in contact at least in certain areas with the magnet armature end (14) and the armature counterpiece end (15) and is composed of a magnetizable material is arranged in the air gap (16), and wherein a magnetic shunt connection which extends at least in certain areas over the disk (19) is present, in at least one position of the magnet armature (2) and armature counterpiece (10) with respect to one another, **characterized in that** in the at least one position of the magnet armature (2) and armature counterpiece (10) with respect to one another, preferably in every position, the series connection has a lower reluctance than the shunt connection which extends over the disk (19), wherein the armature counterpiece end (15) is concave in certain areas and has, in order to reduce the reluctance of the series connection, at least one projection (22) which protrudes toward the magnet armature end (14).

**Revendications**

1. Dispositif électromagnétique (1) comprenant un induit magnétique (2) et une pièce complémentaire d'induit (10) disposée du côté avant de l'induit magnétique (2), dans lequel l'induit magnétique (2) et la pièce complémentaire d'induit (10) peuvent être déplacés l'un par rapport à l'autre et il est prévu entre un côté avant d'induit magnétique (14) et un côté avant de pièce complémentaire d'induit (15) un entrefer (16) par l'intermédiaire duquel un montage en série magnétique du dispositif électromagnétique (1) est présent, dans lequel un disque (19) constitué d'un matériau magnétisable pouvant être mis en contact (20, 21), au moins par zones, avec le côté avant d'induit magnétique (14) et le côté avant de pièce complémentaire d'induit (15) est disposé dans l'entrefer (16), et dans lequel, à au moins une position de l'induit magnétique (2) et de la pièce complémentaire d'induit (10) l'un par rapport à l'autre se trouve un montage en dérivation magnétique passant, au moins par zones, à travers le disque (19), **caractérisé en ce que** le montage en série, à l'au moins une position de l'induit magnétique (2) et de la pièce complémentaire d'induit (10) l'un par rapport à l'autre, de préférence à chaque position, présente une plus faible réluctance que le montage en dérivation passant à travers le disque (19), dans lequel le côté avant de la pièce complémentaire d'induit (15) est concave par zones et, pour réduire la réluctance du montage en série, présente au moins une protubérance (22) opposée au côté avant d'induit magnétique (14).

2. Dispositif électromagnétique selon la revendication 1, **caractérisé en ce que** le montage en série est disposé sensiblement en direction axiale et/ou le montage en dérivation est présent sensiblement en direction radiale au moins dans des zones du disque (19).

3. Dispositif électromagnétique selon l'une quelconque des revendications précédentes, **caractérisé en ce que** les parties avant d'induit magnétique (14) sont, au moins par zones, concaves, convexes, coniques ou tronconiques.

4. Dispositif électromagnétique selon l'une quelconque des revendications précédentes, **caractérisé en ce que** les parties avant d'induit magnétique (14) présentent au moins une protubérance (22) opposée aux parties avant d'induit magnétique (15) pour réduire la réluctance du montage en série.

5. Dispositif électromagnétique selon l'une quelconque des revendications précédents, **caractérisé en ce que** la protubérance (22) est disposée de manière centrale et/ou présente une section transversale circulaire.

6. Dispositif électromagnétique selon l'une quelconque des revendications précédentes, **caractérisé en ce que** le contact entre le disque (19) et le côté avant d'induit magnétique (14) et avec le côté avant de pièce complémentaire d'induit (15) se situe à chaque position de l'induit magnétique (2) et de la pièce complémentaire d'induit (10) l'un par rapport à l'autre.

7. Dispositif électromagnétique selon l'une quelconque des revendications précédentes, **caractérisé en ce que** le contact entre le disque (19) et le côté avant d'induit magnétique (14) se situe en au moins un premier point de contact (20) et le contact entre le disque (19) et le côté avant de pièce complémentaire d'induit (15) se situe en au moins un deuxième point de contact (21), dans lequel les points de contact (20, 21) sont disposés en direction radiale de manière différente et notamment de manière à ne pas se superposer.

8. Dispositif électromagnétique selon l'une quelconque des revendications précédentes, **caractérisé en ce que** le dispositif électromagnétique (1) est une électrovanne, dans lequel l'induit magnétique (2) est fonctionnellement relié à un élément d'étanchéité (3) de l'électrovanne pour le déplacement de cette dernière.

9. Dispositif électromagnétique selon l'une quelconque des revendications précédentes, **caractérisé en ce que** le disque (19) présente une ouverture (33) ayant des dimensions supérieures en direction radiale à celles de la protubérance (22).

10. Dispositif d'assistance à la conduite, notamment dispositif ABS, TCS ou ESP, comportant au moins un dispositif électromagnétique (1) réalisé sous la forme d'une électrovanne, dans lequel le dispositif électromagnétique (1) comporte un induit magnétique (2) et une pièce complémentaire d'induit (10) disposée du côté avant de l'induit magnétique (2), dans lequel l'induit magnétique (2) et la pièce complémentaire d'induit (10) peuvent être déplacés l'un par rapport à l'autre et en ce qu'il est prévu entre un côté avant d'induit magnétique (14) et un côté avant de pièce complémentaire d'induit (15) un entrefer (16) par l'intermédiaire duquel un montage en série magnétique du dispositif électromagnétique (1) est présent, dans lequel un disque (19) constitué d'un matériau magnétisable, celui-ci pouvant être mis en contact, au moins par zones, avec le côté avant d'induit magnétique (14) et le côté avant de pièce complémentaire d'induit (15) est disposé dans l'entrefer (16), et dans lequel, à au moins une position de l'induit magnétique (2) et de la pièce complémentaire d'induit (10) l'un par rapport à l'autre se trouve un montage en dérivation magnétique passant, au moins par zones, à travers le disque (19), **caractérisé en ce que** le montage en série, à l'au moins une position de l'induit magnétique (2) et de la pièce complémentaire d'induit (10) l'un par rapport à l'autre, de préférence à chaque position, présente une plus faible réluctance que le montage en dérivation passant à travers le disque (19), dans lequel le côté avant de la pièce complémentaire d'induit (15) est concave par zones et, pour réduire la réluctance du montage en série, présente au moins une protubérance (22) opposée au côté avant d'induit magnétique (14).

**Fig. 1**

# Fig. 2

EP 2 633 531 B1

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0136243 A1
- GB 2258702 A